# FASCICULE DE BREVET EUROPEEN

(11) **EP 2 513 561 B1**
(45) Date de publication et mention de la délivrance du brevet: **17.08.2016**
(21) Numéro de dépôt: 10805618.5
(22) Date de dépôt: 03.12.2010
(51) Int. Cl.: F23R 3/00, F23R 3/50, F23R 3/60, F02C 7/266, F02C 7/20

(54) **GUIDAGE D'UNE BOUGIE DANS UNE CHAMBRE DE COMBUSTION DE TURBOMACHINE**
FÜHRUNG EINER ZÜNDKERZE IN EINE TURBINENMOTOR-BRENNKAMMER
GUIDING OF A SPARK PLUG INTO A TURBINE ENGINE COMBUSTION CHAMBER

(30) Priorité: 29.03.2010 FR 1001260; 16.12.2009 FR 0906092
(43) Date de publication de la demande: 24.10.2012
(73) Titulaire: SNECMA, 75015 Paris (FR)
(72) Inventeur: BUNEL, Jacques, Marcel, Arthur, 77550 Moissy-Cramayel Cedex (FR); DE SOUSA, Mario, César, F-77550 Moissy-Cramayel Cedex (FR); LEBLOND, Nicolas, Christian, Raymond, 77550 Moissy-Cramayel Cedex (FR); SEVI, Guillaume, 77550 Moissy-Cramayel Cedex (FR); SANDELIS, Denis, Jean, Maurice, F-77550 Moissy-Cramayel Cedex (FR); PIEUSSERGUES, Christophe, 77550 Moissy-Cramayel Cedex (FR)
(74) Mandataire: Ramey, Daniel
(86) Numéro de dépôt international: PCT/FR2010/052606
(87) Numéro de publication internationale: WO 2011/080433

(56) Documents cités:
- EP-A1- 2 088 374
- EP-A2- 1 975 512
- US-A- 3 911 672
- US-A- 5 765 833

## Description

La présente invention concerne essentiellement le guidage d'une bougie d'allumage dans une chambre annulaire de combustion d'une turbomachine, telle qu'un turboréacteur ou un turbopropulseur d'avion.

Une chambre annulaire de combustion de turbomachine comprend une paroi annulaire de fond de chambre reliée à deux viroles sensiblement cylindriques de révolution et coaxiales s'étendant vers l'aval, et un carénage ou capotage fixé sur le fond de chambre et s'étendant vers l'amont.

Le carénage guide le flux d'air fourni par le compresseur de la turbomachine et le partage en une veine centrale qui alimente la chambre de combustion et en deux veines externes qui contournent la chambre de combustion.

L'air issu du compresseur est amené dans la chambre de combustion et mélangé à un carburant, la combustion du mélange étant initiée par au moins une bougie d'allumage montée sur un carter externe et traversant un orifice de la virole externe.

Afin de réaliser l'étanchéité de la chambre de combustion au niveau de cet orifice, il est connu de monter dans cet orifice des moyens de guidage, qui comprennent un guide tubulaire traversé axialement par la bougie et monté avec un jeu axial et transversal sur une cheminée fixée sur la virole externe de la chambre et débouchant dans celle-ci par l'orifice précité.

Le jeu autorise des déplacements axiaux et radiaux entre la chambre et le carter externe résultant de leurs dilatations différentielles pendant les différentes phases de vol, sans que la bougie ne vienne buter ou s'appuyer contre les bords de l'orifice de la virole externe de la chambre.

Il existe également un jeu fonctionnel entre le guide et la bougie afin que le guide puisse être déplacé en translation par rapport à la bougie.

Le guide s'étend dans une veine périphérique délimitée par le carter externe et la chambre de combustion, de sorte que l'air qui circule dans cette veine appuie le guide sur la bougie. Le contact entre la surface interne cylindrique du guide et la surface externe cylindrique de la bougie est situé du côté amont par rapport à l'écoulement d'air.

Les dimensions de la zone de contact étant réduites, la pression de contact ou pression de Hertz est élevée.

En outre, les vibrations et le flux d'air précité ont tendance à faire tourner le guide autour de la bougie.

Ceci crée une usure prématurée de la bougie au niveau de la zone de contact entre le guide et la bougie.

Les documents EP 1 975 512 et US 5,765,833 divulguent des chambres de combustion de l'art antérieur comportant des bougies d'allumage ainsi que des moyens de guidage desdites bougies, portés par une paroi de la chambre de combustion.

L'invention a notamment pour but d'apporter une solution simple, efficace et économique à ce problème.

A cet effet, elle propose une chambre de combustion d'une turbomachine, comprenant au moins une bougie d'allumage portée par un carter extérieur et s'étendant dans des moyens de guidage portés par une paroi de révolution de la chambre, ces moyens de guidage comprenant un guide tubulaire traversé axialement par la bougie et monté avec un jeu axial et transversal sur une cheminée fixée sur la paroi de révolution de la chambre et débouchant dans celle-ci, le guide comportant une collerette annulaire engagée avec jeu dans une gorge annulaire interne de la cheminée, caractérisée en ce que la collerette annulaire est sollicitée en appui sur une paroi de la gorge par un organe élastique monté dans la gorge.

Cet organe élastique permet de limiter les vibrations du guide en fonctionnement et donc de limiter l'usure de la bougie. Il autorise toutefois les déplacements du guide par rapport à la cheminée, afin de compenser les dilatations pendant les différentes phases de vol.

Avantageusement, l'organe élastique est un ressort ou une rondelle élastique, par exemple du type à section en C ou en Oméga.

Selon une autre caractéristique de l'invention, la gorge annulaire est délimitée par deux parois parallèles sensiblement radiales par rapport à l'axe de la cheminée, et l'organe élastique est disposé dans une rainure annulaire de l'une desdites parois.

L'organe élastique est alors en appui contre le fond de la rainure et contre la collerette du guide logée dans la gorge de la cheminée.

Dans un mode de réalisation préféré de l'invention, une paroi de la gorge est formée par un rebord annulaire radial de la cheminée et l'organe élastique est logé dans une rainure de ce rebord, tandis que la paroi de la gorge, contre laquelle la collerette est poussée par l'organe élastique, est formée par une plaque annulaire fixée sur le rebord de la cheminée.

Selon une variante de réalisation de l'invention, l'organe élastique est une lamelle élastique de forme ondulée.

La lamelle élastique peut comporter une zone centrale annulaire entourant le guide tubulaire, et deux extrémités en appui contre deux pattes supports opposées du guide tubulaire s'étendant radialement vers l'extérieur à partir de la collerette.

De façon préférée, la cheminée comporte deux ouvertures radialement externes, au travers desquelles s'étendent les pattes supports du guide tubulaire et les extrémités de la lamelle élastique.

La paroi de la gorge contre laquelle est poussée la collerette du guide est formée par un rebord annulaire radial de la cheminée, la lamelle élastique prenant appui sur une paroi opposée de la gorge.

Selon une caractéristique de l'invention, la paroi opposée de la gorge comporte un renfoncement de forme complémentaire à celle de la lamelle élastique et destiné à la maintenir en position.

L'invention concerne en outre une turbomachine, telle qu'un turboréacteur ou un turbopropulseur, comportant une chambre annulaire de combustion selon l'invention.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe longitudinale d'une partie d'une chambre annulaire de combustion de l'état de la technique ;
- la figure 2 est une vue en perspective d'une partie de la chambre annulaire de la figure 1 ;
- la figure 3 est une vue agrandie des moyens de guidage d'une bougie utilisés dans la chambre des figures 1 et 2 ;
- la figure 4 est une vue en coupe médiane des moyens de guidage de la figure 3 ;
- la figure 5 est une vue en coupe médiane des moyens de guidage selon une première forme de réalisation de l'invention ;
- la figure 6 est une vue de dessus, de la cheminée des moyens de guidage de la figure 5 ;
- la figure 7 est une vue en perspective des moyens de guidage selon une seconde forme de réalisation de l'invention ;
- la figure 8 est une vue en perspective de la cheminée de la figure 7;
- la figure 9 est une vue en perspective du guide tubulaire de la figure 7 ;
- la figure 10 est une vue en perspective de la lamelle élastique de la figure 7 ;
- la figure 11 est une vue en perspective des moyens de guidage de la figure 7, dans laquelle la planque annulaire a été retirée ;
- la figure 12 est une vue en perspective illustrant le montage du guide tubulaire, de la lamelle élastique et de la plaque annulaire de la figure 7;
- la figure 13 est une vue de détail de la figure 12, montrant la zone d'appui de la lamelle élastique sur la plaque annulaire.

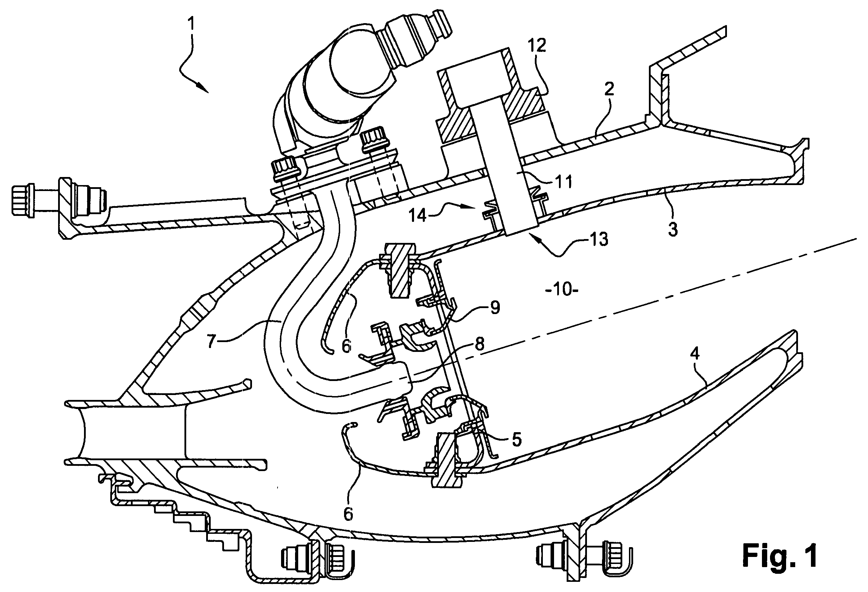

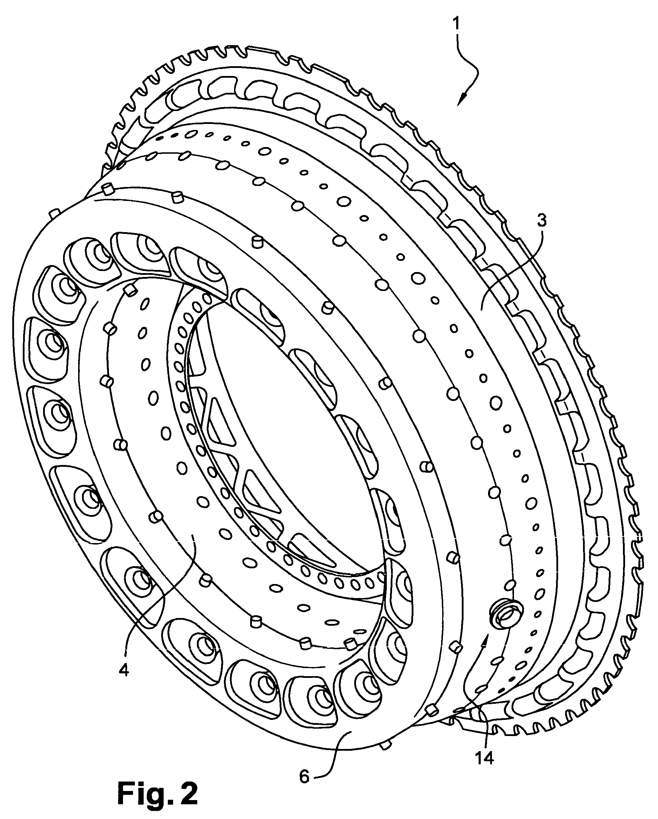

Dans l'état de la technique illustré aux figures 1 et 2, une chambre annulaire de combustion 1 d'une turbomachine telle qu'un turboréacteur ou un turbopropulseur d'avion est montée dans un carter externe 2 et comprend une virole externe 3 de révolution comportant une bride annulaire aval de fixation sur le carter 2, une virole interne 4 de révolution comportant une bride annulaire aval de montage sur un carter interne, et un fond de chambre 5 sur lequel sont montés des carénages 6 s'étendant vers l'amont.

Des cannes d'injection de carburant 7, réparties autour de l'axe de la turbomachine, débouchent dans le fond de chambre 5, par des têtes d'injection 8. Des déflecteurs 9 sont disposés autour de chaque tête d'injection 8.

Le flux d'air fourni par le compresseur de la turbomachine est guidé par les carénages 6 et partagé en une veine centrale destinée à alimenter la chambre de combustion 1 et en deux veines externes destinées à contourner la chambre de combustion.

Les déflecteurs 9 forment un flux d'air entrant de manière tourbillonnante dans une zone de combustion primaire 10 de la chambre de combustion 1. Cet air est mélangé au carburant pulvérisé par les têtes d'injection 8, le mélange étant allumé par au moins une bougie 11.

La bougie 11 est montée, par son extrémité externe, sur un adaptateur 12 fixé au carter externe 2. L'extrémité interne de la bougie 11 traverse un orifice 13 ménagé dans la virole externe 3, jusqu'à affleurer la surface interne de la virole externe 3.

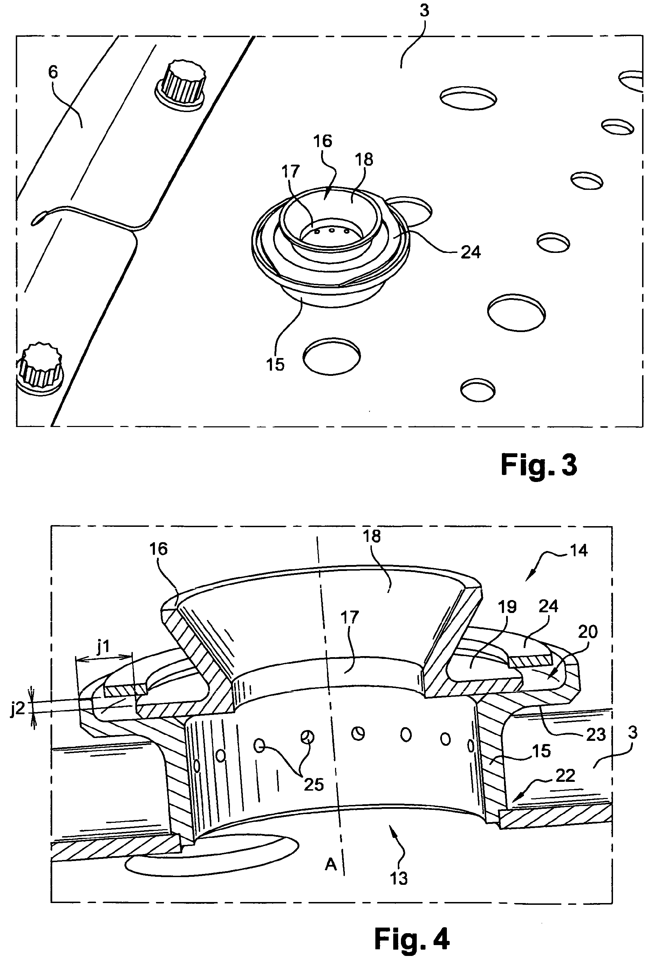

L'orifice 13 est équipé de moyens de guidage 14 de la bougie 11 comprenant une cheminée 15 (figures 3 et 4) fixée sur la virole externe 3 et débouchant dans la chambre 10 par ledit orifice 13, ainsi qu'un guide 16 entourant la bougie et monté avec un jeu axial j1 et transversal j2 sur la cheminée 15. Le guide 16 comprend une surface interne cylindrique 17, destinée à entourer la bougie 11, et raccordée du côté du carter externe 2 à une surface tronconique 18, et du côté opposé à une collerette annulaire 19, destinée à être engagée avec jeu dans une gorge annulaire interne 20 de la cheminée 15.

La surface tronconique 18 s'étend, au moins en partie, dans la veine de circulation d'air 21 située à l'extérieur de la chambre. Comme indiqué ci-dessus, l'air qui circule dans cette veine 21 appuie le guide 16 sur la bougie 11 et sous l'effet combiné des vibrations en fonctionnement, peut faire tourner le guide 16 sur la bougie 11, ce qui crée une usure plus ou moins rapide de la bougie 11.

Cette dernière est de forme générale cylindrique à section circulaire. Une extrémité radialement interne 22 de la cheminée 15 est montée et soudée sur la virole 3, par l'intermédiaire d'un épaulement prenant appui sur le bord de l'orifice 13 et facilitant le positionnement de la cheminée 15.

L'extrémité externe de la cheminée comporte un rebord annulaire 23 s'étendant radialement vers l'extérieur, par rapport à l'axe A de la cheminée 15, sur lequel est fixée une plaque annulaire 24 s'étendant parallèlement au rebord 23 et délimitant la gorge annulaire interne 20 avec celui-ci.

La collerette 19 du guide s'étend dans la gorge annulaire 20, un jeu radial j1 étant formé entre le bord périphérique de la collerette 19 et le fond de la gorge 20, un jeu axial j2 étant en outre formé entre la collerette 19 et la paroi annulaire 24.

Ces jeux j1, j2 ainsi que le coulissement de la bougie 11 dans le guide 16 permettent de compenser les déplacements et les désaxages relatifs entre la bougie d'allumage 11 et la cheminée 15, provoqués par les dilatations dues aux fortes températures apparaissant lors du fonctionnement de la turbomachine.

Des trous de refroidissement 25 (figure 4) sont en outre ménagés dans la paroi cylindrique de la cheminée 15. En fonctionnement, de l'air issu de la veine périphérique 21 entre dans la cheminée 15 par les trous 25, de façon à refroidir la bougie 11.

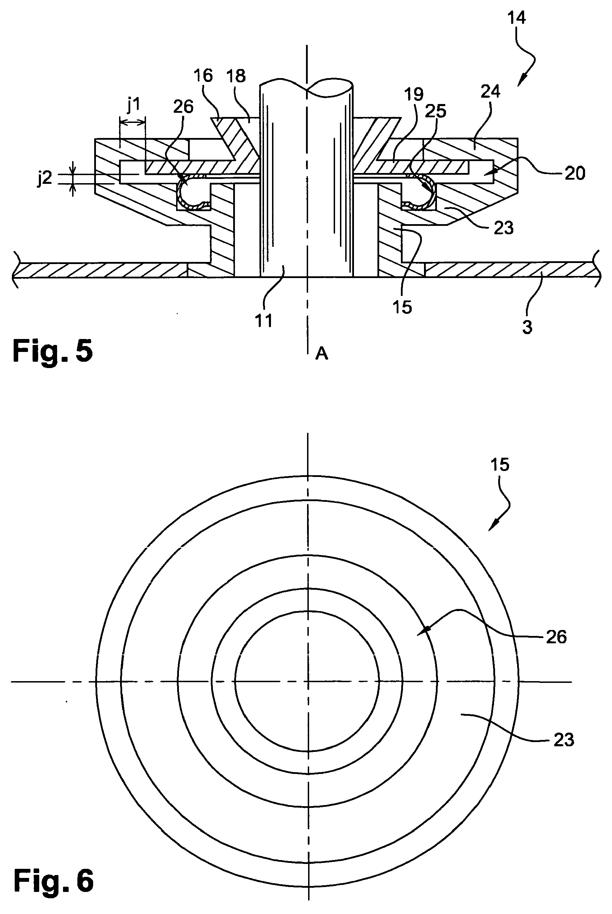

Les figures 5 et 6 représentent des moyens de guidage 14 selon une première forme de réalisation de l'invention, qui diffèrent de ceux décrits précédemment en ce que la collerette annulaire 19 est sollicitée en appui sur la face interne de la plaque annulaire 24, par un organe élastique 25 monté dans la gorge 20.

Plus particulièrement, une rainure annulaire 26 est ménagée dans le rebord 23 et débouche sur la face externe de celui-ci. L'organe élastique 25 est par exemple un ressort ou une rondelle élastique à section en C, comme illustré en figure 5, ou à section en Oméga.

Un bord de l'organe élastique 25 repose contre le fond de la rainure 26, l'autre bord prenant appui contre la face interne de la collerette 19, de manière à repousser cette dernière vers l'extérieur, en rattrapant le jeu j2.

Le jeu j2 est ainsi situé entre la face interne de la collerette 19 et le rebord 23.

De cette manière, lors du fonctionnement de la turbomachine, l'organe élastique 25 limite les vibrations du guide 16 et les amortit par frottement de la collerette 19 sur la plaque annulaire 24, en réduisant ainsi l'usure de la bougie 11.

Il autorise toutefois les déplacements de la collerette 19 dans la gorge 20, c'est-à-dire les déplacements du guide 16 par rapport à la cheminée 15, nécessaires pour compenser les dilatations apparaissant lors des différentes phases de vol.

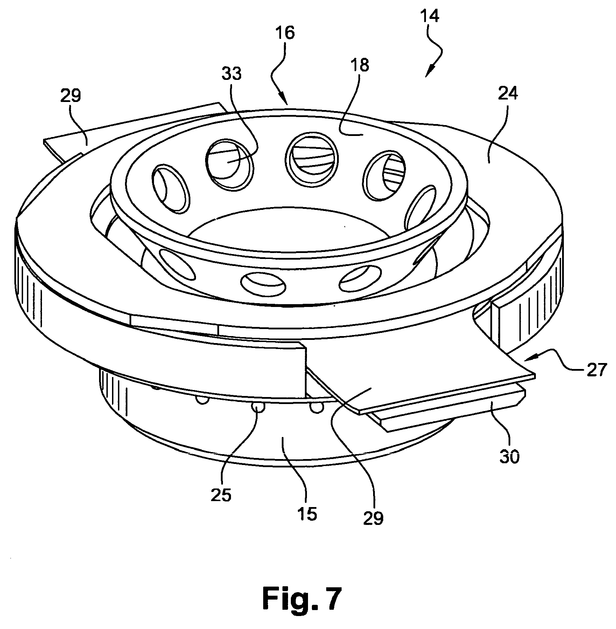

Les figures 7 à 12 représentent une seconde forme de réalisation de l'invention dans laquelle la collerette annulaire 19 est sollicitée en appui sur le rebord annulaire radial 23 de la cheminée 15, par l'intermédiaire d'une lamelle élastique 27 de forme ondulée, disposée entre le guide tubulaire 16 et la plaque annulaire 24.

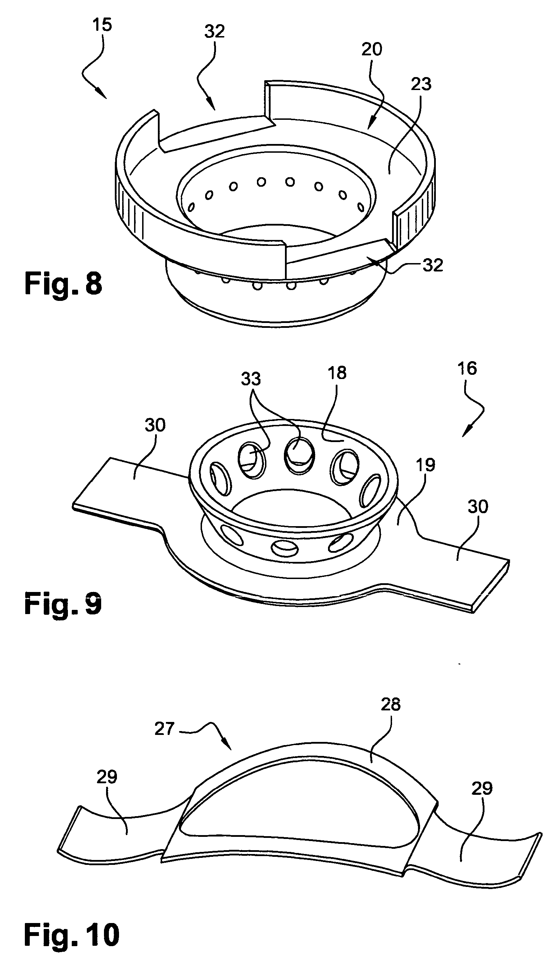

Comme cela est mieux visible en figures 10 à 12, la lamelle élastique 27 comporte une zone centrale annulaire convexe 28 entourant la paroi tronconique 18 du guide tubulaire 16 et prenant appui contre la plaque annulaire 24, et deux extrémités incurvées 29 en appui sur deux pattes supports 30 opposées du guide tubulaire 16, s'étendant radialement vers l'extérieur à partir de la collerette 19. La plaque annulaire 24 comporte un renfoncement ou une empreinte 31 ayant une forme complémentaire de celle de la zone centrale convexe 28 de la lamelle élastique 27.

La partie cylindrique du rebord 23 de la cheminée comporte deux ouvertures 32 (figure 8), au travers desquelles s'étendent les pattes supports 30 du guide tubulaire 16 et les extrémités 29 de la lamelle élastique 27.

La surface tronconique 18 du guide 16 comporte en outre des ouvertures 33 régulièrement réparties sur toute la circonférence.

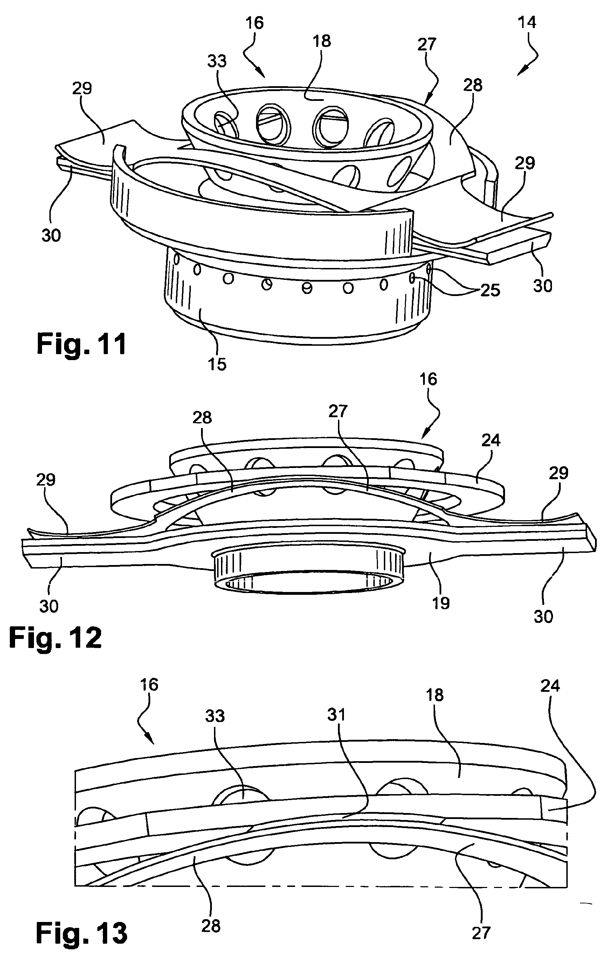

Le montage de ces moyens de guidage 14 va maintenant être décrit plus en détail. Tout d'abord, le guide tubulaire 16 est mis en place dans la gorge 20 de la cheminée 15, les pattes 30 du guide 16 s'étendant au travers des ouvertures 32. La lamelle élastique 27 est ensuite montée autour de la paroi tronconique 18 du guide tubulaire 16, les extrémités 29 de la lamelle 27 prenant appui sur les pattes 30 du guide 16 en traversant les ouvertures 32 (figure 11).

La rotation A de la lamelle élastique 27 et du guide 16 autour de l'axe de la cheminée est limitée par les bords latéraux des ouvertures 32. Il existe toutefois un jeu fonctionnel permettant un léger débattement angulaire entre la cheminée d'une part, et le guide 16 et la lamelle élastique 27 d'autre part.

La lamelle élastique 27 est ensuite contrainte lors de la mise en place de la plaque annulaire 24. Pendant cette phase, du fait de sa déformation, la lamelle élastique 27 s'allonge et ses extrémités 29 glissent vers l'extérieur, le long des pattes 30 du guide 16. Le renfoncement 31 ménagé dans la plaque annulaire 24 permet de maintenir en position la lamelle élastique.

## Revendications

1. Chambre de combustion (1) pour une turbomachine, comprenant au moins une bougie d'allumage (11) portée par un carter extérieur (2) et s'étendant dans des moyens de guidage (14) portés par une paroi de révolution (3) de la chambre (1), ces moyens de guidage (14) comprenant un guide tubulaire (16) traversé axialement par la bougie (11) et monté avec un jeu axial (j1) et transversal (j2) sur une cheminée (15) fixée sur la paroi de révolution (3) de la chambre (1) et débouchant dans celle-ci, le guide (16) comportant une collerette annulaire (19) engagée avec jeu (j1, j2) dans une gorge annulaire interne (20) de la cheminée (15), **caractérisée en ce que** la collerette annulaire (19) est sollicitée en appui sur une paroi (24, 23) de la gorge (20) par un organe élastique (25, 27) monté dans la gorge (20).

2. Chambre de combustion (1) selon la revendication 1, **caractérisée en ce que** l'organe élastique (25) est un ressort ou une rondelle élastique.

3. Chambre de combustion (1) selon la revendication 1 ou 2, **caractérisée en ce que** l'organe élastique (25) présente une section en C ou en Oméga.

4. Chambre de combustion (1) selon l'une des revendications 1 à 3, **caractérisée en ce que** la gorge annulaire (20) est délimitée par deux parois parallèles (23, 24) sensiblement radiales par rapport à l'axe de la cheminée (15), l'organe élastique étant disposé dans une rainure annulaire (26) formée dans l'une (23) desdites parois.

5. Chambre de combustion (1) selon l'une des revendications 1 à 3, **caractérisée en ce qu'**une paroi de la gorge (20) est formée par un rebord annulaire radial (23) de la cheminée (15) et l'organe élastique (25) est logé dans une rainure (26) de ce rebord (23), et **en ce que** la paroi de la gorge (20), contre laquelle la collerette (19) est poussée par l'organe élastique (25), est formée par une plaque annulaire (24) fixée sur le rebord (23) de la cheminée (15).

6. Chambre de combustion (1) selon la revendication 4 ou 5, **caractérisée en ce que** l'organe élastique est une lamelle élastique (27) de forme ondulée.

7. Chambre de combustion (1) selon la revendication 6, **caractérisée en ce que** la lamelle élastique (27) comporte une zone centrale annulaire (28) entourant le guide tubulaire, et deux extrémités (29) en appui contre deux pattes supports opposées (30) du guide tubulaire (16) s'étendant radialement vers l'extérieur à partir de la collerette (19).

8. Chambre de combustion (1) selon la revendication 7, **caractérisée en ce que** la cheminée (15) comporte deux ouvertures (32), au travers desquelles s'étendent les pattes supports (30) du guide tubulaire (16) et les extrémités (29) de la lamelle élastique (27).

9. Chambre de combustion (1) selon l'une des revendications 6 à 8, **caractérisée en ce que** la paroi de la gorge (20) contre laquelle est poussée la collerette (19) du guide est formée par un rebord annulaire radial (23) de la cheminée (15), la lamelle élastique (27) prenant appui sur une paroi opposée (24) de la gorge (20).

10. Chambre de combustion (1) selon la revendication 9, **caractérisée en ce que** la paroi opposée (24) de la gorge (20) comporte un renfoncement (31) de forme complémentaire à celle de la lamelle élastique (27) et destiné à la maintenir en position.

11. Turbomachine, telle qu'un turboréacteur ou un turbopropulseur, comportant une chambre annulaire de combustion (1) selon l'une des revendications 1 à 10.

## Patentansprüche

1. Verbrennungskammer (1) für eine Turbomaschine, die mindestens eine Zündkerze (11) umfasst, welche von einem Außengehäuse (2) getragen wird und sich in den Führungsmitteln (14), die von einer Umdrehungswand (3) der Kammer (1) gestützt werden, erstreckt, wobei diese Führungsmittel (14) eine ringförmige Führung (16) umfassen, durch welche die Zündkerze (11) axial verläuft, wobei diese mit einem axialen Spiel (j1) und einem quer verlaufenden Spiel (j2) auf einem Zylinder (15) montiert ist, welcher an der Umdrehungswand (3) der Kammer (1) befestigt ist und zu dieser führt, wobei die Führung (16) einen ringförmigen Flansch (19) enthält, der mit einem Spiel (j1, j2) in eine ringförmige innere Nut (20) des Zylinders (15) geschoben wird, **dadurch gekennzeichnet, dass** der ringförmige Flansch (19) durch Aufliegen eines elastischen Elements (25, 27), das in die Nut (20) montiert wurde, an die Wand (24, 23) der Nut (20) gedrückt wird.

2. Verbrennungskammer (1) nach Anspruch 1, **dadurch gekennzeichnet, dass** das elastische Element (25) eine Feder oder ein Federring ist.

3. Verbrennungskammer (1) nach Anspruch 1 oder 2, **dadurch gekennzeichnet, dass** das elastische Element (25) einen c- oder omegaförmigen Querschnitt aufweist.

4. Verbrennungskammer (1) nach einem der Ansprüche 1 bis 3, **dadurch gekennzeichnet, dass** die ringförmige Nut (20) durch zwei parallele, im Wesentlichen radial zur Achse des Zylinders (15) stehende Wände (23, 24) begrenzt ist, wobei das elastische Element in einer ringförmigen Rille (26), die in einer (23) der besagten Wände gebildet wird, angeordnet ist.

5. Verbrennungskammer (1) nach einem der Ansprüche 1 bis 3, **dadurch gekennzeichnet, dass** eine Wand der Nut (20) durch einen radialen ringförmigen Rand (23) des Zylinders (15) geformt wird und das elastische Organ (25) in einer Rille (26) dieses Randes (23) liegt, und dadurch, dass die Wand der Nut (20), gegen welche der Flansch (19) durch das elastische Element (25) gedrückt wird, durch eine am Rand (23) von Zylinder (15) befestigte ringförmige Platte (24) gebildet wird.

6. Verbrennungskammer (1) nach Anspruch 4 oder 5, **dadurch gekennzeichnet, dass** das elastische Element ein wellenförmiges Federblatt (27) ist.

7. Verbrennungskammer (1) nach Anspruch 6, **dadurch gekennzeichnet, dass** das Federblatt (27) einen mittleren ringförmigen Bereich (28) um die ringförmige Führung herum umfasst, und zwei Enden (29), die an den beiden einander gegenüberliegenden Haltestegen (30) der ringförmigen Führung (16) aufliegen und sich radial ausgehend vom Flansch (19) nach außen erstrecken.

8. Verbrennungskammer (1) nach Anspruch 7, **dadurch gekennzeichnet, dass** der Zylinder (15) zwei Öffnungen (32) umfasst, durch welche die Haltestege (30) der ringförmigen Führung (16) und die Enden (29) des Federblatts (27) führen.

9. Verbrennungskammer (1) nach einem der Ansprüche 6 bis 8, **dadurch gekennzeichnet, dass** die Wand der Nut (20), gegen welche der Flansch (19) der Führung gedrückt wird, durch einen radialen ringförmigen Rand (23) des Zylinders (15) geformt wird, wobei das Federblatt (27) an einer gegenüberliegenden Wand (24) der Nut (20) anliegt.

10. Verbrennungskammer (1) nach Anspruch 9, **dadurch gekennzeichnet, dass** die Wand (24) gegenüber der Nut (20) eine Vertiefung (31) in einer Form aufweist, die die Form des Federblatts (27), welches sie in Position halten soll, ergänzt.

11. Turbomaschine, wie z.B. ein Turbostrahltriebwerk oder ein Turbopropellertriebwerk, die eine ringförmige Verbrennungskammer (1) nach einem der Ansprüche 1 bis 10 aufweist.

## Claims

1. A combustion chamber (1) for a turbine engine including at least one ignition sparkplug (11) carried by an outer casing (2) and extending through guide means (14) carried by a wall (3) forming a body of revolution of the chamber (1), the guide means (14) comprising a tubular guide (16) having the sparkplug (11) passing axially therethrough, which guide is mounted with axial and transverse clearance (j1, j2) on a chimney (15) fastened to the wall (3) of the chamber (1) and opening out therein, the guide (16) having an annular collar (19) engaged with clearance (j1, j2) in an internal annular groove (20) of the chimney (15), the combustion chamber being **characterized in that** the annular collar (19) is urged to press against a wall (24, 23) of the groove (20) by a resilient member (25, 27) mounted in the groove (20).

2. A combustion chamber (1) according to claim 1, **characterized in that** the resilient member (25) is a spring or a spring washer.

3. A combustion chamber (1) according to claim 1 or claim 2, **characterized in that** the resilient member (25) presents a C-shaped or Ω-shaped section.

4. A combustion chamber (1) according to any one of claims 1 to 3, **characterized in that** the annular groove (20) is defined by two parallel walls (23, 24) that are substantially radial relative to the axis of the chimney (15), the resilient member being placed in an annular groove (26) formed in one of said walls (23).

5. A combustion chamber (1) according to any one of claims 1 to 3, **characterized in that** a wall of the groove (20) is formed by a radial annular rim (23) of the chimney (15) and the resilient member (25) is housed in a groove (26) in said rim (23), and **in that** the wall of the groove (20) against which the collar (19) is pressed by the resilient member (25) is formed by an annular plate (24) fastened to the rim (23) of the chimney (15).

6. A combustion chamber (1) according to claim 4 or 5, **characterized in that** the resilient member is a spring blade (27) of undulating shape.

7. A combustion chamber (1) according to claim 6, **characterized in that** the spring blade (27) comprises an annular central zone (28) surrounding the tubular guide, together with two ends (29) bearing against two opposite support tabs (30) of the tubular guide (16) extending radially outwards from the collar (19).

8. A combustion chamber (1) according to claim 7, **characterized in that** the chimney (15) has two openings (32) through which there extend the support tabs (30) of the tubular guide (16) and the ends (29) of the spring blade (27).

9. A combustion chamber (1) according to any one of claims 6 to 8, **characterized in that** the wall of the groove (20) against which the collar (19) of the guide is pressed is formed by a radial annular rim (23) of the chimney (15), the spring blade (27) bearing against an opposite wall (24) of the groove (20).

10. A combustion chamber (1) according to claim 9, **characterized in that** the opposite wall (24) of the groove (20) includes a setback (31) of shape complementary to the shape of the spring blade (27) and designed to hold it in position.

11. A turbine engine such as a turboprop or a turbojet, the engine including an annular combustion chamber (1) according to any one of claims 1 to 10.
